# EUROPÄISCHE PATENTSCHRIFT

(11) **EP 0 907 596 B1**
(45) Veröffentlichungstag und Bekanntmachung des Hinweises auf die Patenterteilung: **15.03.2000**
(21) Anmeldenummer: 97929178.8
(22) Anmeldetag: 12.06.1997
(51) Int. Cl.: B65G 53/22

(54) **VERFAHREN UND VORRICHTUNG ZUR FLUIDISIERUNG VON FEINKÖRNIGEM SCHÜTTGUT**
PROCESS AND DEVICE FOR FLUIDISING FINE-GRAINED BULK PRODUCTS
PROCEDE ET DISPOSITIF POUR FLUIDIFIER UN PRODUIT EN VRAC A GRAINS SERRES

(30) Priorität: 18.06.1996 DE 19624303
(43) Veröffentlichungstag der Anmeldung: 14.04.1999
(73) Patentinhaber: Kohlenstaubtechnik Dr. Schoppe GmbH, 82538 Geretsried (DE)
(72) Erfinder: SCHOPPE, Fritz, D-82057 Icking (DE)
(74) Vertreter: Körner, Ekkehard, Dipl.-Ing.
(86) Internationale Anmeldenummer: EP9703079
(87) Internationale Veröffentlichungsnummer: WO9748629

(56) Entgegenhaltungen:
- EP-A- 0 036 894
- DE-A- 3 910 073
- FR-A- 1 526 156
- GB-A- 673 242
- US-A- 1 616 547

## Beschreibung

Es ist bekannt, daß man feinkörniges Schüttgut, insbesondere Stäube und Mehle, in einen flüssigkeitsähnlichen Zustand versetzen kann, indem man durch das in einem Behälter mit gasdurchlässigem Boden (Fließboden) befindliche Schüttgut von unten ein Gas in ausreichender Menge bläst. Das Schüttgut, nachfolgend der Einfachheit halber und als Beispiel mit Staub bezeichnet, läßt sich im so fluidisierten Zustand einfacher fördern als in unfluidisiertem Zustand, und insbesondere läßt es sich mittels Lochscheibendosierern in dosierter Menge in einen Trägergasstrom einbringen zur weiteren Verwendung an einem entfernten Ort. Ein solcher Lochscheibendosierer in einer Fluidisierungsvorrichtung ist aus der EP 0 210 162 B1 bekannt, die den Ausgangspunkt der Erfindung bildet.

Die EP 0 036 894 A1 beschreibt einen Dosierbehälter für Stäube mit Fließboden, der von unten angeblasen wird. Der Dosierbehälter wird, gesteuert von zwei Niveausonden, in einem vorbestimmten Füllungsbereich gehalten. Aus den gemachten Angaben lassen sich ein Fluidisierluftdurchsatz von 11 g/s pro m² Bodenfläche und ein Druckverlust im Fließboden von 39 hPa errechnen. Die Druckschrift spricht von einer mittleren Dichte eines fluidisierten Kohlenstaubes von 200 bis 250 kg/m³.

Die FR-A-1 526 156 beschreibt die Fluidisierung von Stäuben über einem Fließboden, wobei durch Variation der Fluidisiergasmenge die Endkonzentration (=Dichte) des fluidisierten Staubes beeinflußt werden soll.

GB-A-673 242 beschreibt eine Anlage zur Abgabe von fluidisierten Stäuben in gleichmäßigen Raten aus einem Speichertank. Der Füllstand im Tank kann in weiten Bereichen variieren, ohne daß die Abgaberate aus dem Tank beeinflußt wird. Der Gasdurchsatz läßt sich mit 61 g/s pro m² Fließboden errechnen. Über den Druckabfall im Fließboden ist nichts offenbart.

Wenn man eine Massendosierung eines fluidisierten Staubes mittels volumendosierender Geräte, wie beispielsweise Ausflußdüsen, Zellenrädern, Lochscheibendosierern und dgl. ausführen will, dann muß man dafür Sorge tragen, daß die Dichte des Staubes im fluidisierten Zustand konstant ist. Von Wirbelschicht-Düsenböden, Fließrinnen und ähnlichen Vorrichtungen ist aber bekannt, daß der darauf liegende Staub umso höher aufgewirbelt wird, je mehr Luft oder Gas man von unten durch die Staubschicht hindurchbläst. Das Staubniveau hebt sich also mit steigender Luft- oder Gasmenge, sodaß die mittlere Dichte der fluidisierten Schicht entsprechend umgekehrt proportional sinkt.

Durch Verschmutzen der Düsen oder des Fließbodens, auf dem sich der Staub in der Fluidisierungsvorrichtung befindet, oder durch örtliche Störungen des Fließbodens, wie z.B. grobe, auf ihm liegende Feststoffstücke, die vom Gasstrom nicht mitgerissen werden, kann sich die Fluidisiergasmenge in der fluidisierten Schicht örtlich sehr ändern, selbst wenn die Fluidisiergasmenge insgesamt gleichbleibt. Solche örtlichen Änderungen führen aber zu einer Ungleichförmigkeit der Dichte innerhalb der fluidisierten Schicht.

Der Erfindung liegt die Aufgabe zugrunde, ein Verfahren und eine Vorrichtung zur Herstellung einer weitestgehend Konstanten Dichte in fluidisiertem Schüttgut, die unabhängig von der Fluidisiergasmenge ist, anzugeben.

Diese Aufgabe wird bezüglich des Verfahrens durch die Merkmale des Anspruchs 1, bezüglich der Vorrichtung durch die Merkmale des Anspruchs 7 gelöst. Vorteilhafte Ausgestaltungen der Erfindung sind Gegenstand der jeweils abhängigen Ansprüche.

Der von der Erfindung erzielte Erfolg, nämlich die konstante Dichte des mit Luft oder Gas fluidisierten Staubes, läßt sich leicht feststellen, wenn man den zu fluidisierenden Staub in einen Behälter mit einem Fließboden füllt, verschiedene Luft- oder Gasmengen durch den Fließboden drückt und dabei die Höhe der Oberfläche des fluidisierten Staubes über dem Fließboden mißt.

Bei Einsatz der Erfindung ist über einen gewissen Bereich der Fluidisiergasdurchsätze die Höhe der Oberfläche des Staubes über dem Fließboden unabhängig vom Fluidisiergasdurchsatz. Die Oberfläche des Staubes ist dabei nur wenig bewegt und macht den Eindruck einer langsam brodelnden Flüssigkeit. Der Staubaustritt aus der Oberfläche ist an der Sichtbarkeitsgrenze. Stößt man den Behälter an, schwappt der Staub darin wie eine Flüssigkeit hin und her. Rührt man mit einem Stab darin, kann man Wirbel wie beim Rühren in Wasser erzeugen, die sich allmählich beruhigen, sobald man mit dem Rühren aufhört.

Die Erfindung ist insbesondere zur Erzielung einer konstanten Dichte in mit Hilfe von Luft fluidisiertem Braunkohlenstaub konzipiert worden. Braunkohlenstaub neigt, wie viele andere Stäube, zur Bildung von größeren Einzelsträhnen der den Staub durchströmenden Fluidisierluft, was Ungleichmäßigkeiten der Staubschicht verursachen kann. Eine solche Strähnenbildung läßt sich vermeiden, wenn man in vorteilhafter weise auf die Staubschicht mechanisch einwirkt. Hierzu kann man beispielsweise den Behälter in schaukelnde Bewegungen versetzen oder in dem fluidisierten Braunkohlenstaub durch ein rotierendes oder pendelndes Rührwerk langsam rühren.

Füllt man in einen vorzugsweise zylindrischen oder zylinderähnlichen Behälter, der mit einem Fließboden versehen ist, der einen Druckabfall des Gases beim Durchströmen von wenigstens 10 hPa, bezogen auf einen Gasdurchsatz von 45 g/s pro m² Fließbodenfläche erzeugt, Braunkohlenstaub bis zu einer Höhe von 500 mm im abgesetzten Zustand über dem Fließboden ein, so hat dieser Braunkohlenstaub in Ruhe eine Dichte von ca. 500 bis 550 kg/m³. Schaltet man dann die Fluidisierluftströmung und einen im Behälter befindlichen Rührer ein, hebt sich die Oberfläche des Staubes unter Brodeln und unregelmäßigen Staubdurchbrüchen zunächst proportional der Fluidisierluftmenge. Bei einer Fluidisierluftmenge von etwa 15 g/s pro m² Fließbodenfläche ist eine Höhe von 790 bis 810 mm erreicht. Bei einer Fluidisierluftmenge von 20 g/s pro m² beträgt die Höhe 800 mm. Die Oberfläche des Staubes wird nach 10 bis 20 s glatt und frei von Staubdurchbrüchen und brodelt ruhig vor sich hin. Die Höhe von 800 mm bleibt weiter bis zu einem Fluidisierluftdurchsatz bis ca. 85 g/s pro m² konstant. Eine weitere Steigerung des Luftmengendurchsatzes führt zu unkontrollierten Luftdurchbrüchen.

Die mittlere Dichte des fluidisierten Staubes ist somit innerhalb eines Fluidisierluft-Durchsatzbereiches von ca. 20 bis 80 g/s pro m² Fließbodenfläche konstant. Sie liegt bei 300 bis 310 kg/m³.

Bringt man unten oder seitlich am Behälter unterhalb der Stauboberfläche eine Auslaufdüse an, fließt der Staub wie eine schwarzbraune Flüssigkeit aus dem Behälter in einer Menge, die näherungsweise dem Satz von Bernoulli gehorcht.

Taucht man in den fluidisierten Staub eine bekannte Dosierlochscheibe ein, so füllen sich deren Löcher schnell entsprechend der Fließgeschwindigkeit des fluidisierten Staubes und können in bekannter Weise mit Luft in eine Förderleitung eingetragen werden. Eine hierfür besonders geeignete Vorrichtung ist in der schon erwähnten EP 0 210 162 B1 beschrieben. Wenn die Dosierlochscheibe horizontal, also mit lotrechter Achse, angeordnet ist, füllen sich alle Löcher mit fluidisiertem Staub gleicher Dichte, wodurch der Lochscheibendosierer eine deutlich verbesserte Dosiergenauigkeit erhält. Eine vertikale Anordnung der Lochscheibe, also mit horizontaler Achse, ist ebenfalls möglich. Zwar herrscht im oberen Bereich der Staubschicht eine etwas geringere Dichte als im unteren Bereich, aber die in den Blasquerschnitt eintretenden Löcher der Lochscheibe beinhalten dennoch stets ein Gemisch aus Staub und Fluidisiergas konstanter Dichte.

Man sollte die Menge des in den Behälter eingegebenen Staubes zweckmäßigerweise so dosieren, daß in fluidisiertem Zustand eine Höhe über dem Fließboden von etwa 800 mm erreicht wird. Grundsätzlich sind auch größere Füllhöhen möglich, doch muß dann der Druck des Fluidisiergases entsprechend erhöht werden. Als Mindesthöhe sind 100 mm ausreichend.

Die Verfahrens- und Vorrichtungsangaben, wie sie in den Ansprüchen enthalten sind, stellen die Optimallösung im Rahmen der Erfindung dar. Bei Abweichungen von diesen Abgaben, verengt sich zunächst derjenige Bereich des Fluidisiergasdurchsatzes, in dem die Dichte vom Fluidisiergasdurchsatz unabhängig ist. Ferner können grobe Gasdurchbrüche durch die Oberfläche der fluidisierten Staubschicht auftreten, insbesondere bei mangelhafter mechanischer Bewegung des Staubes, was mit ungleichmäßiger Dichteverteilung in der Staubschicht verbunden ist, dem beispielsweise durch einen Rührer begegnet werden kann.

Gleiches gilt bei unzureichendem Druckabfall des Fluidisiergases beim Durchströmen des Bodens. Wenn dieser Druckabfall deutlich kleiner ist, als der in der darüber befindlichen fluidisierten Schicht, verstärken sich Ungleichmäßigkeiten gegenseitig, und eine eventuell vorhandene gleichmäßige Dichteverteilung wird gestört. Darum sind Böden mit unzureichendem Druckverlust, etwa Sinterböden, für die Realisierung der Erfindung weniger geeignet. Vorteilhafte Fließböden stehen beispielsweise aus einem Kunststoffgewebe üblicher Art aus Kette und Schuß mit einer Breite jedes Faserbündels von bevorzugt 1/100 bis 1/400 der gewünschten Fluidisierhöhe, bei Braunkohlenstaub etwa dem 100-fachen der mittleren Korngröße, die bei 0,06 mm liegt.

Der Druckabfall des Gases beim Durchströmen des Fließbodens von wenigstens 10 hPa, vorzugsweise 25 bis 30 hPa, bezogen auf einen Gasdurchsatz von 45 g/s m², wird durch eine geeignete Wahl des Fließbodenmaterials erreicht. Solche Materialien sind handelsüblich.

Das erfindungsgemäße Verfahren ist nicht nur zur Erzielung einer von der Fluidisiergasmenge weitestgehend unabhängigen, konstanten Dichte von fluidisiertem Kohlenstaub geeignet, sondern auch bei anderen anorganischen und organischen Stäuben, wie Kalk, Steinkohle, Pigmente oder Holzmehl. Statt Luft können andere Gase, wie Stickstoff, Verbrennungsabgase usw. für die Fluidisierung eingesetzt werden.

Das erfindungsgemäße Verfahren hat noch einen weiteren, in der Praxis bedeutsamen Vorteil. Vielfach wird nämlich angenommen, daß z.B. der bekanntlich sehr zündfreudige und daher als gefährlich angesehene Braunkohlenstaub, in der erfindungsgemäßen Weise mit Luft aufgewirbelt, besonders gefährlich sei und bei Berührung mit dem ersten Funken explodieren werde. Das Gegenteil ist der Fall. Überraschenderweise zeigte sich nämlich, daß der in der erfindungsgemäßen Weise mit Luft zu konstanter Dichte fluidisierte Braunkohlenstaub mit keinem bekannten Mittel, etwa Schweißbrenner, Funkenstrecke oder Glühdraht, entzündbar ist. Der fluidisierte Braunkohlenstaub wird damit zur Flammsperre. Die Verwendung eines solchen Braunkohlenstaubes als Flammsperre ist daher Gegenstand des Anspruchs 6. Man erspart sich damit Zusatzausrüstungen, etwa Schnellschlußorgane, Überwachungseinrichtungen und dgl., in der den Braunkohlenstaub aus der Fluidisierungsvorrichtung abfördernden Leitung. Der durch die Erfindung erreichte Zustand des Braunkohlenstaubes ist eigensicher. Dementsprechend kann die Fluidisierungsvorrichtung als Flammsperreinrichtung eingesetzt werden, die beispielsweise einen Kohlenstaubtank von einem Kohlenstaubbrenner trennt.

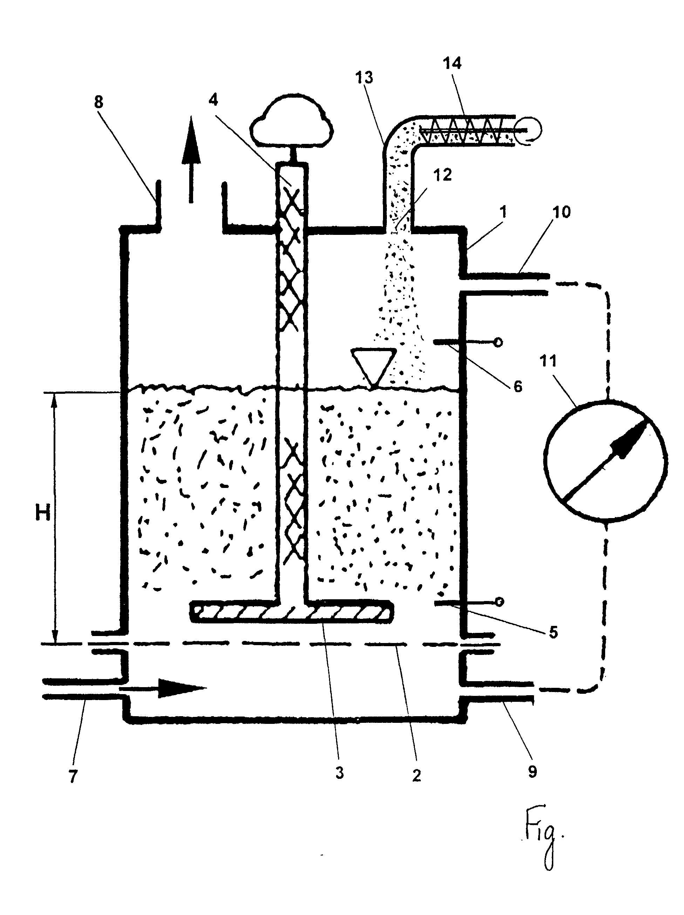

Eine Vorrichtung zur Ausführung des Verfahrens ist in der Zeichnung schematisch dargestellt. Sie besteht aus einem Behälter 1, in dessen unterem Bereich ein Fließboden 2 angeordnet ist, der den Behälterquerschnitt überspannt und der so dimensioniert ist, daß er einen Druckabfall beim Durchströmen mit Luft von wenigstens 10 hPa, bevorzugt 25 bis 30 hPa, bezogen auf einen Luftdurchsatz von 45 g/s pro m² Fließbodenfläche erzeugt. Über dem Fließboden befindet sich ein Rühren 3, dessen Antriebswelle 4 nach oben geführt ist.

In der Mantelwand des Behälters 1 sind in vorbestimmten Höhen von etwa 100 mm und 800 mm über dem Fließboden 2 ein unterer Höhenwächter 5 und ein oberer Höhenwächter 6 angeordnet. Sie dienen der Ermittlung eines notwendigen minimalen und eines bevorzugten maximalen Niveaus von fluidisiertem Staub im Behälter 1.

In den vom Fließbcden 2 abgeteilten Raum unterhalb des Fließbodens 2 mündet eine Zuführleitung 7 für ein Fluidisiergas. Am Kopf des Behälters 1 ist eine Gasauslaßöffnung 8 angeordnet. An den Raum unter dem Fließboden 2 ist auch eine Meßleitung 9 angeschlossen. Eine zweite Meßleitung 10 mündet in den Behälter 1 oberhalb der oberen Meßsonde 6. An die beiden Meßleitungen 9 und 10 ist ein Druckdifferenzmesser 11 angeschlossen. Einrichtungen zum Einleiten von Staub in den Behälter 1 bestehen beispielsweise aus einer von einem Tank (nicht dargestellt) herführenden Förderleitung 12, die in einen am Kopf des Behälters 1 mündenden Einlaß 13 endet und in der eine Förderschnecke 14 angeordnet ist, deren Antrieb (nicht dargestellt) von den von den Höhenwächtern 5 und 6 abgegebenen Signalen gesteuert ist.

Einrichtungen zum Ausleiten von fluidisiertem Staub aus dem Behälter 1 bestehen beispielsweise aus einer Zellenradanordnung, wie sie aus der schon zitierten EP 0 210 152 B1 bekannt ist. Auf deren Beschreibung kann hier verzichtet werden, da sie nicht zur Erfindung gehört und zur Erläuterung der Erfindung nicht erforderlich sind.

Wie schon erwähnt, ist der Behälter 1 oberhalb des Fließbodens 2 vorzugsweise zylindrisch oder zylinderähnlich, weil sich dadurch ein sehr gleichmäßiger Gasdurchsatz über den gesamten Behälterquerschnitt erreichen läßt und sich keine Strömungsschatten oder nicht von der Strömung erfaßte Räume ergeben.

Im Betrieb wird der Behälter mit dem zu fluidisierenden Staub gefüllt, der sich zunächst auf dem Fließboden 2 absetzt. Sodann wird ein Gas, beispielsweise Luft, unter geeignetem Druck durch die Zuführleitung 7 in den Behälterraum unter dem Fließboden 2 eingeleitet. Die unter Druck stehende Luft drückt sich durch den Fließboden 2 und den darauf befindlichen Staub, in dem ein Rührer 3 langsam rotiert, um Strähnenbildung zu vermeiden. In den Behälter 1 ist so viel Staub eingefüllt und im Betrieb laufend nachgefüllt, daß im fluidisierten Zustand die Höhe H der Oberfläche des Staubes zwischen den von den Höhenwächtern 5 und 6 bestimmten Niveaus liegt. Mit Hilfe des Differenzdruckmessers 11 kann der sich über dem Fließboden 2 und die fluidisierte Staubschicht einstellende Druckabfall überprüft werden.

## Patentansprüche

1. Verfahren zur Herstellung einer konstanten Dichte in fluidisiertem, feinkörnigem Schüttgut, insbesondere einem Staub oder Mehl, beim Blasen eines Gases von unten durch das in einem Behälter mit gasdurchlässigem Boden befindliche Schüttgut, **gekennzeichnet durch** die folgenden Merkmale:
a) der Gasdurchsatz beträgt 20 bis 80 g/s pro m² durchblasenem Behälterboden,
b) der Druckabfall des Gases beim Durchströmen des Behälterbodens beträgt wenigstens 10 hPa, bezogen auf einen Gasdurchsatz von 45 g/s pro m² Behälterboden, und
c) die Höhe der Schüttgutschicht in fluidisiertem Zustand wird auf wenigstens 100 mm eingestellt.

2. Verfahren nach Anspruch 1, dadurch gekennzeichnet, daß der Druckabfall des Gases beim Durchströmen des Behälterbodens 25 bis 30 hPa, bezogen auf einen Gasdurchsatz von 45 g/s m², ist.

3. Verfahren nach Anspruch 1 oder 2, dadurch gekennzeichnet, daß die Höhe der Schüttgutschicht in fluidisiertem Zustand zwischen 300 mm und 800 mm eingestellt wird.

4. Verfahren nach einem der vorhergehenden Ansprüche, dadurch gekennzeichnet, daß die Höhe der Schüttgutschicht in fluidisiertem Zustand auf das 100- bis 400-fache des Abstandes von im Behälterboden ausgebildeten Löchern eingestellt wird.

5. Verfahren nach einem der vorhergehenden Ansprüche, dadurch gekennzeichnet, daß das fluidisierte Schüttgut mechanisch bewegt, insbesondere gerührt wird.

6. Verwendung eines nach dem Verfahren nach einem der vorhergehenden Ansprüche mit Luft fluidisierten Braunkohlenstaubes als Flammsperre.

7. Vorrichtung zur Herstellung einer konstanten Dichte in fluidisiertem, feinkörnigem Schüttgut, insbesondere einem Staub oder Mehl, umfassend einen Behälter mit einem gasdurchlässigen Boden und eine Einrichtung zur Erzeugung einer Gasströmung durch den Boden von unten nach oben, dadurch gekennzeichnet, daß die Einrichtung zur Erzeugung der Gasströmung derart dimensioniert ist, daß die eine Gasströmungsmenge von 20 bis 80 g/s pro m² Behälterboden erzeugt, der Behälterboden derart dimensioniert ist, daß der Druckabfall des Gases beim Durchströmen mit einer Menge von 45 g/s pro m² Behälterboden wenigstens 10 hPa beträgt, und daß eine Überwachungseinrichtung (5) vorgesehen ist, die eine Mindesthöhe des Schüttguts in fluidisiertem Zustand im Behälter von wenigstens 100 mm sicherstellt.

8. Vorrichtung nach Anspruch 7, dadurch gekennzeichnet, daß eine weitere Überwachungseinrichtung (6) vorgesehen ist, die eine Maximalhöhe des Schüttgutes in fluidisiertem Zustand im Behälter sicherstellt.

9. Vorrichtung nach Anspruch 8, dadurch gekennzeichnet, daß sich die weitere Überwachungsvorrichtung ein in einer Höhe von etwa 800 mm über dem gasdurchlässigen Behälterboden angebrachter Höhenwächter (6) ist.

10. Vorrichtung nach einem der Ansprüche 7 bis 9, dadurch gekennzeichnet, daß in dem Behälter (1) oberhalb des Bodens (2) ein langsam umlaufender Rührer (3) angeordnet ist.

11. Verwendung der Vorrichtung nach einem der Ansprüche 7 bis 10 als Flammsperre bei der Förderung von mit Luft fluidisiertem Braunkohlenstaub.

## Claims

1. A method of generating a constant density in a fluidized, fine-grained bulk material, in particular a dust or flour, when blowing a gas from the bottom through the bulk products located in a container having a gas-permeable bottom, characterized by the following features:
a) the gas flow rate is 20 to 80 g/s per m² container bottom blown-through,
b) the pressure drop of the gas when flowing through the container is at least 10 hPa related to a gas flow rate of 45 g/s per m² container bottom, and
c) the height of the bulk material in fluidized condition is set to at least 100 mm.

2. A method as claimed in claim 1, characterized in that the pressure drop of the gas when flowing through the container bottom is 25 to 30 hPa related to a gas flow rate of 45 g/m².

3. A method as claimed in claim 1 or 2, characterized in that the height of the bulk material in fluidized state is set to between 300 mm and 800 mm.

4. A method as claimed in one of the preceding claims, characterized in that the height of the bulk material in fluidized state is set to hundredfold or four hundredfold the distance of holes formed in the container bottom.

5. A method as claimed in one of the preceding claims, characterized in that the fluidized bulk material is moved mechanically, in particular stirred.

6. Use of a brown coal dust fluidized by air by a method as claimed in one of the preceding claims as a flame barrier.

7. An apparatus of generating a constant density in a fluidized, fine-grained bulk material, in particular a dust or flour, comprising a container having a gas-permeable bottom and a means for generating a gas flow through the bottom from the ground to the top, characterized in that the means for generating the gas flow is dimensioned such that it generates a gas flow rate of 20 to 80 g/s per m² container bottom, and the container bottom is dimensioned such that the pressure drop of the gas when flowing through at a rate of 45 g/s per m² container bottom is at least 10 hPa, and that a monitoring means (5) is provided which ensures a minimum height of the bulk material in fluidized state in the container of at least 100 mm.

8. An apparatus as claimed in claim 7, characterized in that a further monitoring means (6) is provided, which ensures a maximum height of the bulk material in fluidized state in the container.

9. An apparatus as claimed in claim 8, characterized in that the further monitoring means is a height supervisor (6) arranged at an altitude of approximately 800 mm above the gas-permeable container bottom.

10. An apparatus as claimed in one of claims 7 to 9, characterized in that a slowly rotating stirrer (3) is arranged in the container (1) above the bottom (2).

11. Use of the apparatus as claimed in one of claims 7 to 10 as a flame barrier when conveying brown coal dust fluidized by air.

## Revendications

1. Procédé permettant de réaliser une densité constante dans une matière en vrac à grains fins, divisée, notamment une matière pulvérulente ou une farine, lorsqu'un gaz est soufflé, d'en dessous, à travers la matière en vrac située dans une enceinte comportant un fond laissant passer le gaz, caractérisé par les particularités suivantes :
a) le débit de gaz vaut 20 à 80 g/s par m² du fond de l'enceinte traversé par le soufflage,
b) la perte de charge du gaz lors de la traversée du fond de l'enceinte vaut au moins 10 hPa, rapportée à un débit de gaz de 45 g/s par m² du fond de l'enceinte, et
c) la hauteur de la couche de matière en vrac à l'état fluidisé est réglée à au moins 100 mm.

2. Procédé suivant la revendication 1, caractérisé en ce que la perte de charge du gaz lors de la traversée du fond de l'enceinte vaut 25 à 30 hPa, rapportée à un débit de gaz de 45 g/s par m².

3. Procédé suivant la revendication 1 ou 2, caractérisé en ce que la hauteur de la couche de matière en vrac à l'état fluidisé est réglée entre 300 mm et 800 mm.

4. Procédé suivant l'une des revendications précédentes, caractérisé en ce que la hauteur de la couche de matière en vrac à l'état fluidisé est réglée à 100 à 400 fois l'espacement de trous ménagés dans le fond de l'enceinte.

5. Procédé suivant l'une des revendications précédentes, caractérisé en ce que la matière en vrac fluidisée est déplacée mécaniquement, notamment est soumise à une agitation.

6. Utilisation d'un poussier de lignite, fluidisé à l'air conformément à l'une des revendications précédentes, en tant que barrage anti-flammes.

7. Dispositif permettant de réaliser une densité constante dans une matière en vrac à grains fins, fluidisée, notamment une matière pulvérulente ou une farine, comprenant une enceinte qui comporte un fond laissant passer le gaz et un dispositif servant à produire un écoulement de gaz, de bas en haut, à travers le fond, caractérisé en ce que le dispositif servant à produire l'écoulement de gaz est dimensionné de façon telle qu'il produit un débit de gaz de 20 à 80 g/s par m² du fond de l'enceinte, en ce que le fond de l'enceinte est dimensionné de façon telle que la perte de charge du gaz lors du passage à un débit de 45 g/s par m² du fond de l'enceinte vaut au moins 10 hPa et en ce qu'il est prévu un dispositif de surveillance (5) qui assure une hauteur minimale de la matière en vrac à l'état fluidisé dans l'enceinte d'au moins 100 mm.

8. Dispositif suivant la revendication 7, caractérisé en ce qu'il est prévu un autre dispositif de surveillance (6) qui assure une hauteur maximale de la matière en vrac à l'état fluidisé dans l'enceinte.

9. Dispositif suivant la revendication 8, caractérisé en ce que l'autre dispositif de surveillance est un dispositif de contrôle de niveau (6) disposé à une hauteur d'environ 800 mm au-dessus du fond de l'enceinte laissant passer le gaz.

10. Dispositif suivant l'une des revendications 7 à 9, caractérisé en ce qu'un agitateur (3) tournant lentement est disposé dans l'enceinte (1) au-dessus du fond (2).

11. Utilisation du dispositif suivant l'une des revendications 7 à 10 en tant que barrage anti-flammes lors du transport de poussier de lignite fluidisé à l'air.
